# EUROPEAN PATENT APPLICATION

(11) **EP 2 197 197 A2**
(43) Date of publication of application: **16.06.2010**
(21) Application number: 09178945.3
(22) Date of filing: 11.12.2009
(51) Int. Cl.: H04N 5/225

(54) **Display apparatus**

(30) Priority: 12.12.2008 JP 2008317719
(71) Applicant: Sony Corporation, Tokyo (JP)
(72) Inventor: Chiba, Hiroyuki, TOKYO (JP)
(74) Representative: Thévenet, Jean-Bruno

(57) **Abstract**

A display apparatus includes: an outer case (2) having a first surface (2c) and a second surface (2b) which constitute an angular section (2g); a display monitor (3); and a monitor movement mechanism (5) which includes a monitor support section (41) to support the display monitor (3), and a guide section (42) to guide movement of the monitor support section (41) to cause the monitor support section (41) to rotate while a rotation center is changed, and moves the display monitor (3) from the first surface (2c) of the outer case (2) to the second surface (2b) and from the second surface (2b) to the first surface (2c).

## Description

### BACKGROUND OF THE INVENTION

### 1. Field of the Invention

The present invention relates to a display apparatus including a display monitor such as a liquid crystal display.

### 2. Description of the Related Art

Hitherto, there is provided a display apparatus including a display monitor such as a liquid crystal display. For example, a general video camera includes a display monitor which is openably and closably provided at a side surface of a camera body. In such a video camera, a user can turn a display screen of the display monitor in a visible direction, and can take a video while viewing a photographing image displayed on the display monitor. Besides, when the display monitor is not used, the display screen of the display monitor is made opposite to the side surface of the camera body and the display monitor can be closed.

The display monitor of the general video camera is rotatably attached to the camera body by a hinge. Accordingly, a hinge receiving portion through which the hinge is inserted is provided at the side part of the display monitor and the side surface of the camera body. Thus, the outer shape of the display monitor becomes smaller than the size of the side surface of the camera body, and upsizing of the display screen is prevented.

A related art display apparatus including a display monitor is disclosed in, for example, JP-A-11-191127 (patent document 1). The patent document 1 discloses a video camera. The video camera disclosed in the patent document 1 includes a camera body, a holding section movably provided to the camera body, and a liquid crystal display section rotatably provided to the holding section.

The holding section is backwardly slidable along the side surface of the camera body. The holding section is rotatable through a hinge in a state where it slides backwardly. Thus, when the holding section is slid backwardly along the side surface of the camera body and is rotated by 90 degrees with respect to the slide direction, the holding section moves from the side surface of the camera body to a back section.

Since the liquid crystal display section is rotatably attached to the moving holding section, it is, together with the holding section, moved to the back section from the side surface of the camera body. In the video camera disclosed in the patent document 1, the liquid crystal display section is not attached to the camera body by a hinge. Thus, the outer shape of the liquid crystal display section is made substantially equal to the side surface of the camera body, and the display screen can be made large.

### SUMMARY OF THE INVENTION

However, in the video camera disclosed in the patent document 1, unless the operation of sliding the holding section backwardly along the side surface of the camera body and the operation of rotating the holding section with respect to the camera body are performed, the holding section can not be moved to the back section from the side surface of the camera body. Accordingly, in order to move the liquid crystal display section from the side surface of the camera body to the back section, the two operations for moving the holding section are required.

Thus, it is desirable to enable a display monitor to move from a first surface of a camera body to a second surface only by a rotation operation.

According to an embodiment of the invention, there is provided a display apparatus including an outer case, a lens barrel, a display monitor and a monitor movement mechanism. The outer case has a first surface and a second surface which form an angular section. The lens barrel is contained in the outer case, and is provided with a lens to form an optical image of a subject. The display monitor displays the image obtained through the lens barrel. The monitor movement mechanism includes a monitor support section to support the display monitor and a guide section to guide the movement of the monitor support section so that the monitor support section rotates while changing the rotation center. The monitor movement mechanism moves the display monitor from the first surface of the outer case to the second surface and from the second surface to the first surface.

In the display apparatus according to the embodiment of the invention, the monitor support section of the monitor movement mechanism rotates while changing the rotation center, and the display monitor is moved from the first surface of the outer case to the second surface and from the second surface to the first surface. By this, when climbing over the angular section of the outer case, the display monitor is lifted with respect to the angular section and is moved.

In the display apparatus according to the embodiment of the invention, the display monitor can be moved from the first surface to the second surface, which form the angular section of the outer case, only by the rotation operation.

### BRIEF DESCRIPTION OF THE DRAWINGS

FIG. 1 is a perspective view of a state where a display monitor of a digital video camera is disposed on an upper surface according to a first embodiment of the invention.
FIG. 2 is a perspective view of a state where the display monitor of the digital video camera is disposed on a back surface according to the first embodiment of the invention.
FIG. 3 is a perspective view in which a left side surface of an outer case of the digital video camera in the state shown in FIG. 1 and an upper surface section of a panel case are removed.
FIG. 4 is a perspective view in which the left side surface of the outer case of the digital video camera in the state shown in FIG. 2 and the upper surface section of the panel case are removed.
FIG. 5 is a perspective view of a monitor movement mechanism and a monitor rotation mechanism of the digital video camera according to the first embodiment of the invention.
FIG. 6 is an exploded perspective view of the monitor movement mechanism and the monitor rotation mechanism of the digital video camera according to the first embodiment of the invention.
FIGS. 7A to 7C are explanatory views showing an operation of the display monitor by the monitor rotation mechanism of the digital video camera according to the first embodiment of the invention.
FIGS. 8A to 8C are explanatory views showing an operation of the display monitor by the monitor movement mechanism of the digital video camera according to the first embodiment of the invention.
FIG. 9 is a perspective view of a state where a display monitor of a digital video camera is disposed at a left side surface according to a second embodiment of the invention.
FIG. 10 is a perspective view of a state where the display monitor of the digital video camera is disposed at a back surface according to the second embodiment of the invention.
FIG. 11 is an explanatory view showing an attachment state of a monitor movement mechanism of the digital video camera according to the second embodiment of the invention.

### DESCRIPTION OF PREFERRED EMBODIMENTS

Hereinafter, a display apparatus according to an embodiment of the invention will be described with reference to the drawings. In the respective drawings, common members are denoted by the same reference numerals. Besides, the present invention is not limited to the following embodiments.

### <1. First Embodiment>

### [Outer appearance structure of the display apparatus]

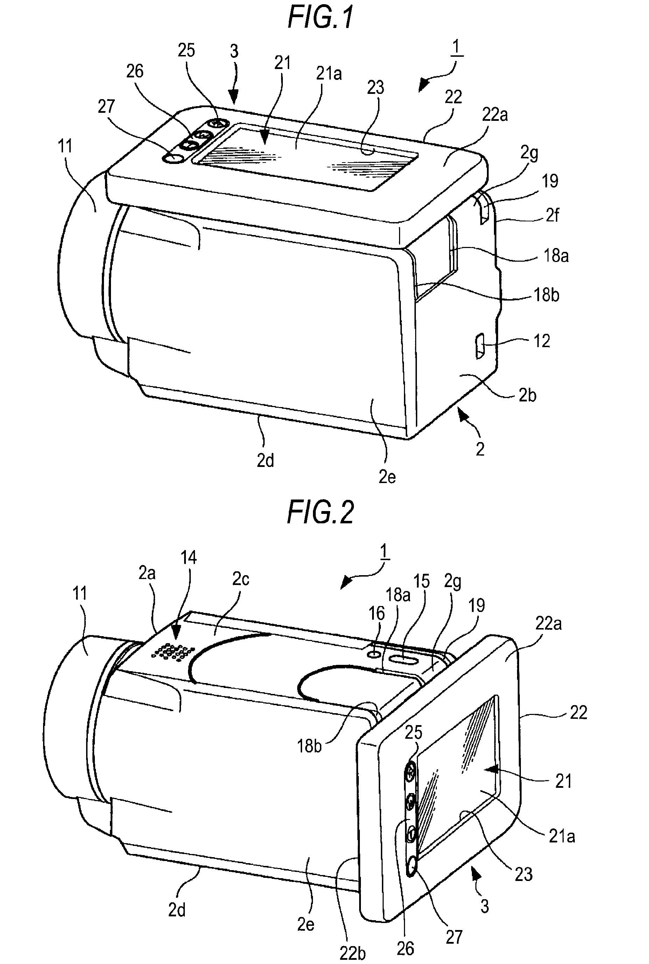

First, an outer appearance structure of a digital video camera according to a first embodiment of the invention will be described with reference to FIG. 1 and FIG. 2.

In the following description, a subject side is a front side, and a photographer side is a back side. A front and back direction, an up and down direction, and a right and left direction are respectively directions in a state where the digital video camera is seen from the photographer side.

FIG. 1 is a perspective view of a state where a display monitor of the digital video camera according to the first embodiment is disposed on an upper surface. FIG. 2 is a perspective view of a state where the display monitor of the digital video camera according to the first embodiment is disposed on a back surface.

In the digital video camera 1 shown in FIG. 1 and FIG. 2, an optical image is converted into an electric signal by a solid image pickup device such as a CCD image sensor or a CMOS image sensor, and the signal can be stored in a hard disk drive (HDD). Besides the digital video camera 1 displays an image based on the signal converted by the solid image pickup device on a display monitor 3.

The digital video camera 1 includes an outer case 2 which forms the outer appearance shape, and the display monitor 3. The outer case 2 is formed to have a substantially rectangular parallelepiped shape extending long in the front and back direction. The outer case 2 includes a front surface 2a directed forward, a back surface 2b directed backward, an upper surface 2c, a lower surface 2d, a left side surface 2e, and a right side surface 2f.

In this embodiment, the upper surface 2c indicates a specific example of a first surface, and the back surface 2b indicates a specific example of a second surface. The upper surface 2c and the back surface 2b are planes substantially orthogonal to each other, and form an angular section 2g. The area of the back surface 2b is smaller than the area of the upper surface 2c.

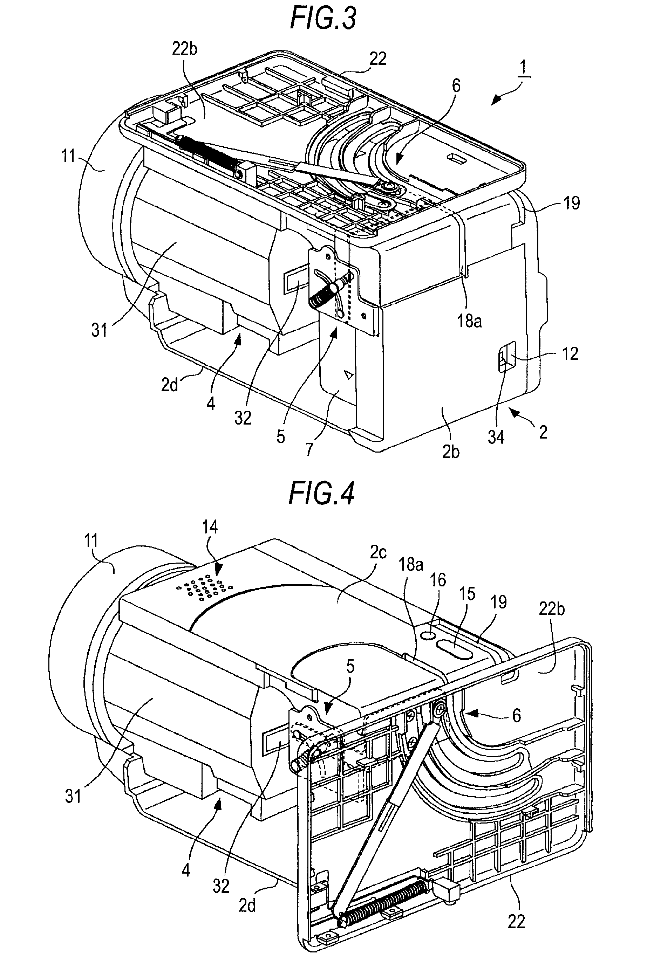

The front surface 2a of the outer case 2 is provided with a cosmetic tube 11 protruding forward. The cosmetic tube 11 is formed into a cylindrical shape having a tube hole opening forward. In the tube hole of the cosmetic tube 11, an objective lens provided at the front of an after-mentioned lens barrel 4 (see FIG. 3) is disposed to face forward. Besides, a light emitting section (not shown) of a flash device is provided at an upper part of the cosmetic tube 11.

The back surface 2b of the outer case 2 is provided with a terminal opening section 12 for exposing a connection terminal 34 of an after-mentioned battery 7. The upper surface 2c of the outer case 2 is provided with a sound collection hole 14 for microphone, a zoom button 15 for zoom operation, and a recording button 16. The sound collection hole 14, the zoom button 15 and the recording button 16 are covered with the display monitor 3 when the display monitor 3 is disposed on the upper surface of the outer case 2.

The upper surface 2c of the outer case 2 may be provided with other operation buttons, and an accessory shoe to which an accessory such as a video light or an external microphone is detachably attached. The other operation buttons include a power source button, a function changing button to change functions (for example, recording function, reproducing function, still image photographing function, etc.) of the digital video camera 1, and the like.

Besides, the outer case 2 is provided with a pair of support section through grooves 18a and 18b, and a connecting line through groove 19. The pair of support section through grooves 18a and 18b and the connecting line through groove 19 are provided to be continuous with the upper surface 2c and the back surface 2b which form the angular section 2g. A monitor support section 41 of an after-mentioned monitor movement mechanism 5 movably passes through the pair of support section through grooves 18a and 18b. A connecting line to electrically connect a control circuit and the display monitor 3 movably passes through the connecting line through groove 19.

The display monitor 3 includes a plane display panel 21 such as a liquid crystal panel or an organic EL (electroluminescence) panel, and a panel case 22 to contain the plane display panel 21. The plane display panel 21 is formed into a rectangular plate shape, and one of the planes is a display screen 21a to display an image.

The panel case 22 is made of a flat housing of a substantially rectangular parallelepiped, and includes an upper surface section 22a and a bottom section 22b which forms a surface opposite to the upper surface section 22a and faces the outer case 2. The size of the upper surface section 22a and the size of the bottom section 22b of the panel case 22 are set to be substantially the same as that of the upper surface 2c of the outer case 2.

The upper surface section 22a of the panel case 22 is provided with a panel opening section 23 for exposing the display screen 21a of the plane display panel 21. The panel opening 23 is formed to be rectangular, and has two long sides extending in a long-side direction of the upper surface section 22a and two short sides extending in a short-side direction of the upper surface section 22a. Besides, the upper surface section 22a of the panel case 22 is provided with a function changing button 24, a zoom button 25 and a recording button 26. These operation buttons 25 to 27 are disposed along one of the short sides of the panel opening section 23.

### [Internal structure of the display apparatus]

Next, the internal structure of the digital video camera 1 will be described with reference to FIG. 3 and FIG. 4.

FIG. 3 is a perspective view of a state where the left side surface 2e of the outer case 2 of the digital video camera 1 shown in FIG. 1 and the upper surface section 22a of the panel case 22 are removed. FIG. 4 is a perspective view of a state where the left side surface 2e of the outer case 2 of the digital video camera 1 shown in FIG. 2 and the upper surface section 22a of the panel case 22 are removed.

The lens barrel 4, the monitor movement mechanism 5 to move the display monitor 3, the battery 7, the hard disk drive (not shown), the control circuit (not shown) and the like are provided inside the outer case 2.

The lens barrel 4 includes plural lenses constituting an optical system, and a lens barrel case 31 to fix or movably support the plural lenses. The lens barrel case 31 includes a housing formed into a substantially rectangular parallelepiped shape, and is attached to the outer case 2 in a state where optical axes of the plural lenses are directed in the front and back direction.

An objective lens in the plural lenses is disposed to face forward in the front of the lens barrel case 31. On the other hand, a solid image pickup device 32 is attached to the back of the lens barrel case 31. The solid image pickup device 32 converts an image (light) of a subject guided by the optical system including the plural lenses into an electric image signal and supplies the image signal to the control circuit.

The monitor movement mechanism 5 moves the display monitor 3 from the upper surface 2c of the outer case 2 to the back surface 2b or from the back surface 2b to the upper surface 2c. Further, the digital video camera 1 is provided with a monitor rotation mechanism 6 to rotate the display monitor 3 on the after-mentioned monitor support section 41 of the monitor movement mechanism 5. The monitor movement mechanism 5 and the monitor rotation mechanism 6 will be described later in detail.

The battery 7 is disposed backward in the outer case 2. The battery 7 supplies electric power to the display monitor 3, the lens barrel 4, the hard disk drive and the control circuit. The battery 7 is provided with the connection terminal 34 for charging. The connection terminal 34 is exposed from the terminal opening section 12 provided in the back surface 2b of the outer case 2.

The control circuit performs the drive control of the lens barrel 4, the display monitor 3, the hard disk drive and the like, and performs the process of the image signal supplied from the solid image pickup device 32. For example, the control circuit causes the display monitor 3 to display the image based on the processed image signal, or causes the hard disk drive to store the processed image signal. Besides, the control circuit calls the image signal stored in the hard disk drive, and causes the display monitor 3 to display the image based on the image signal.

### [Structure of the monitor movement mechanism and the monitor rotation mechanism]

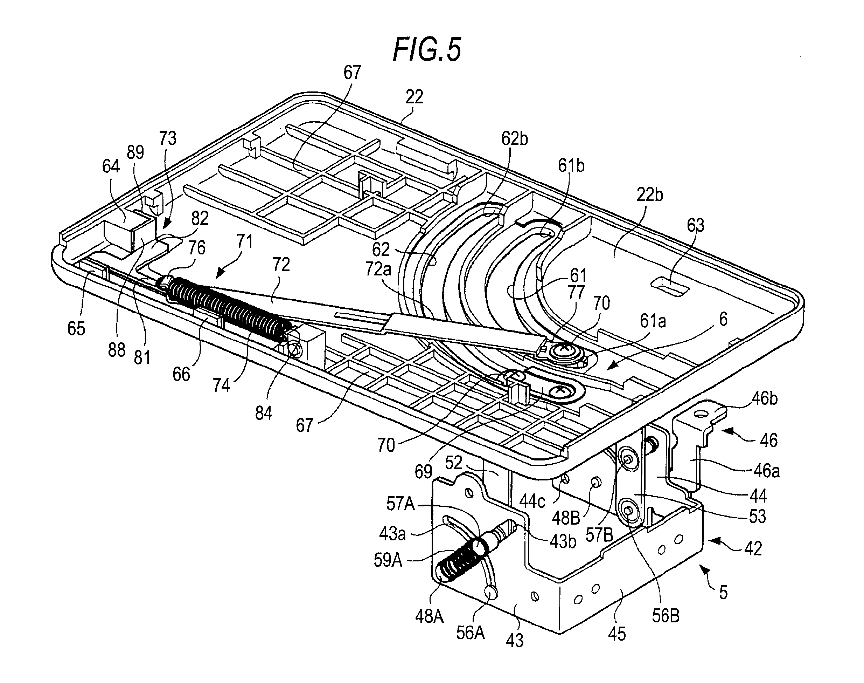

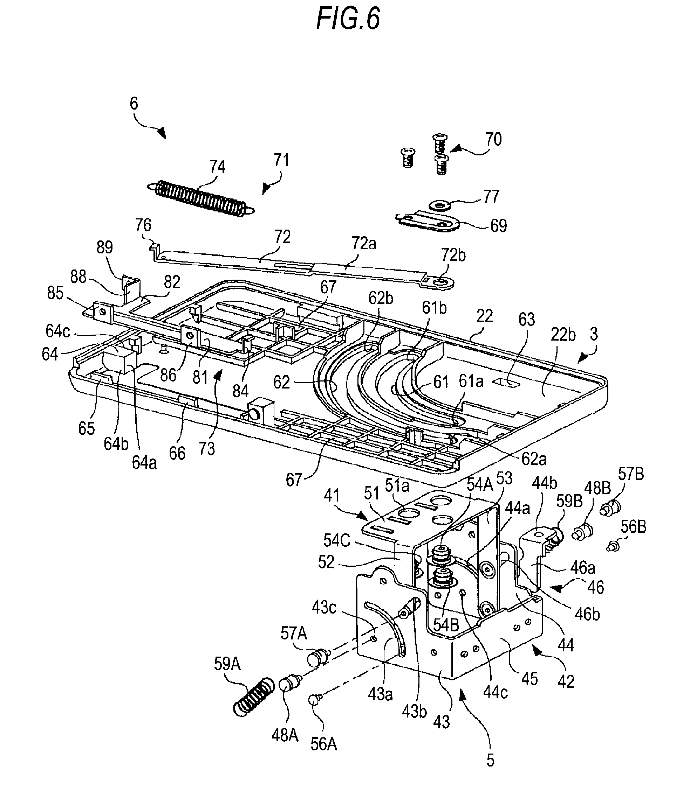

Next, the monitor movement mechanism 5 and the monitor rotation mechanism 6 will be described with reference to FIG. 5 and FIG. 6.

FIG. 5 is a perspective view showing the monitor movement mechanism 5 and the monitor rotation mechanism 6. FIG. 6 is an exploded perspective view of the monitor movement mechanism 5 and the monitor rotation mechanism 6.

The monitor movement mechanism 5 includes the monitor support section 41 to support the display monitor 3, and a guide section 42 which movably supports the monitor support section 41 and guides it so that the monitor support section 41 rotates while the rotation center is changed.

First, the guide section 42 will be described. The guide section 42 is fixed to the inside of the outer case 2, and is shaped so that the shape viewed in the up and down direction is substantially C-shaped. The guide section 42 includes a pair of guide plates 43 and 44 opposite to each other in the right and left direction, a coupling plate 45 to couple the pair of guide plates 43 and 44, and an attachment plate 46 continuous with the guide plate 44.

The guide plate 43 is provided with a first movement rail 43a, a second movement rail 43b and a pin fixing hole 43c. The first movement rail 43a and the second movement rail 43b are formed by providing grooves passing through the plane of the guide plate 43. The first movement rail 43a has an arc shape expanding to the side of the angular section 2g (see FIG. 3) of the outer case 2. A first engagement pin 56A fixed to the monitor support section 41 is slidably engaged with the first movement rail 43a.

The second movement rail 43b is disposed at the outer diameter side of the first movement rail 43a. The second movement rail 43b is formed into a straight line shape extending in the diameter direction of the first movement rail 43a and to the angular section 2g of the outer case 2. A second engagement pin 57A fixed to the monitor support section 41 is slidably engaged with the second movement rail 43b. Besides, a fixing pin 48A is crimped to the pin fixing hole 43c of the guide plate 43.

Similarly to the guide plate 43, the guide plate 44 is provided with a first movement rail 44a, a second movement rail 44b, and a pin fixing hole 44c. The first movement rail 44a, the second movement rail 44b, and the pin fixing hole 44c are formed to be symmetrical with the first movement rail 43a, the second movement rail 43b, and the pin fixing hole 43c of the guide plate 43.

A first engagement pin 56B fixed to the monitor support section 41 is slidably engaged with the first movement rail 44a. A second engagement pin 57B fixed to the monitor support section 41 is slidably engaged with the second movement rail 44b. A fixing pin 48B is crimped to the pin fixing hole 44c of the guide plate 44.

The coupling plate 45 is formed into a rectangle extending in the right and left direction, and has a plane orthogonal to the front and back direction. The guide plates 43 and 44 are continuous with two short sides of the coupling plate 45. The attachment plate 46 includes a rising piece 46a rising in the up and down direction, and a fixed piece 46b continuous with the rising piece 46a and bent by substantially 90 degrees. The fixed piece 46b of the attachment plate 46 has a plane orthogonal to the up and down direction.

The pair of guide plates 43 and 44, the coupling plate 45 and the fixed piece 46b of the attachment plate 46 are respectively fixed to the outer case 2 by fixing screws (not shown). That is, the guide section 42 is fixed to the outer case 2 in the right and left direction, the front and back direction, and the up and down direction, and the fixing of the guide section 42 can be strengthened.

Next, the monitor support section 41 will be described. The monitor support section 41 includes an attachment piece 51 to which the display monitor 3 is attached, and a pair of arm pieces 52 and 53 continuous with the attachment piece 51. The attachment piece 51 rotatably supports the display monitor 3 through the monitor rotation mechanism 6. That is, the monitor rotation mechanism 6 is a mechanism to rotate the display monitor 3 on the monitor support section 41 (attachment piece 51). The monitor rotation mechanism 6 will be described later in detail.

The attachment piece 51 is made of a substantially rectangular plate body, and has two long sides extending in the right and left direction. The attachment piece 51 is provided with three through holes 51a for crimping three fixed shafts 54A, 54B and 54C. The three fixed shafts 54A, 54B and 54C are respectively crimped to the attachment piece 51 in a state where they pass through the three through holes 51a. The three fixed shafts 54A, 54B and 54C have screw holes to which after-mentioned fixing screws 71 are screwed.

The pair of arm pieces 52 and 53 are made of rectangular plate bodies. Each of the arm pieces 52 and 53 is continuous with the short side of the attachment piece 51, and extends in a direction substantially orthogonal to the plane of the attachment piece 51. The pair of arm pieces 52 and 53 movably pass through the pair of support section through grooves 18a and 18b provided in the outer case 2. The attachment piece 51 is disposed on the upper surface 2c or the back surface 2b of the outer case 2.

The first engagement pin 56A and the second engagement pin 57A are crimped to the arm piece 52. The height of the first engagement pin 56A in the axial direction is set to be lower than the height of the second engagement pin 57A in the axial direction. The first engagement pin 56A is fixed to the front end of the arm piece 52. The first engagement pin 56A is slidably engaged with the first movement rail 43a provided in the guide plate 43 and passes through the guide plate 43.

On the other hand, the second engagement pin 57A is fixed to an intermediate section of the arm piece 52. The second engagement pin 57A is slidably engaged with the second movement rail 43b provided in the guide plate 43, and passes through the guide plate 43. One end of a pulling coil spring 59A, which is a specific example of a movement mechanism urging member, is fixed to the front end of the second engagement pin 57A protruding to the outside of the guide plate 43.

The other end of the pulling coil spring 59A is fixed to the front end of the fixing pin 48A fixed to the guide plate 43. Since the height of the first engagement pin 56A in the axial direction is lower than the height of the second engagement pin 57A in the axial direction, the pulling coil spring 59A does not interfere with the first engagement pin 56A.

The first engagement pin 56B and the second engagement pin 57B are crimped to the arm piece 53. The first engagement pin 56B is the same as the first engagement pin 56A, and the second engagement pin 57B is the same as the second engagement pin 57A. The first engagement pin 56B is fixed to the front end of the arm piece 53. The first engagement pin 56B is slidably engaged with the first movement rail 44a provided in the guide plate 44, and passes through the guide plate 44.

On the other hand, the second engagement pin 57B is fixed to an intermediate section of the arm piece 53. The second engagement pin 57B is slidably engaged with the second movement rail 44b provided in the guide plate 44, and passes through the guide plate 44. One end of a pulling coil spring 59B, which is a specific example of a movement mechanism urging member, is fixed to the front end of the second engagement pin 57B protruding to the outside of the guide plate 44.

The other end of the pulling coil spring 59B is fixed to the front end of the fixing pin 48B fixed to the guide plate 44. Since the height of the first engagement pin 56B in the axial direction is lower than the height of the second engagement pin 57B in the axial direction, the pulling coil spring 59B does not interfere with the first engagement pin 56B.

The pair of arm pieces 52 and 53 are guided to the first movement rails 43a and 44a of the guide section 42 and the second movement rails 43b and 44b, so that the monitor support section 41 is rotated by substantially 90 degrees while the rotation center is changed. By this, the monitor support section 41 climbs over the angular section 2g and moves from the upper surface 2c of the outer case 2 to the back surface 2b (or from the back surface 2b to the upper surface 2c).

The monitor support section 41 is typically urged by the pulling coil springs 59A and 59B so that the second engagement pins 57A and 57B go toward the lower parts of the second movement rails 43b and 44b (toward the side of the first movement rails 43a and 44a). Thus, the attitude of the monitor support section 41 becomes stable in the state where the second engagement pins 57A and 57B are positioned at the lower ends of the second movement rails 43b and 44b.

When the second engagement pins 57A and 57B are positioned at the lower ends of the second movement rails 43b and 44b, the attachment piece 51 is positioned on the upper surface 2c of the outer case 2 or the back surface 2b. Accordingly, with respect to the attitude of the monitor support section 41, the state where the attachment piece 51 is positioned on the upper surface 2c of the outer case 2 or the back surface 2b is maintained.

Next, the monitor rotation mechanism 6 will be described.

The monitor rotation mechanism 6 includes a first rotation rail 61 and a second rotation rail 62 provided in the bottom section 22b of the panel case 22, and the three fixed shafts 54A, 54B and 54C crimped to the attachment piece 51 of the monitor support section 41. The monitor rotation mechanism 6 includes a rotation urging section 71 to urge the display monitor 3 so that the attitude of the display monitor 3 with respect to the monitor support section 41 becomes a first attitude or a second attitude.

The bottom section 22b of the panel case 22 is provided with the first rotation rail 61, the second rotation rail 62, a connecting line through hole 63, and fixing projections 64, 65 and 66. The first rotation rail 61 and the second rotation rail 62 are formed by providing grooves passing through the bottom section 22b of the panel case 22.

The first rotation rail 61 is formed to have an arc shape expanding to the substantially center part of the bottom section 22b, and includes a first end 61a positioned on the side of one of the short sides of the bottom section 22b and a second end 61b positioned on the side of one of the long sides of the bottom section 22b. The fixed shaft 54A fixed to the attachment piece 51 is engaged with the first rotation rail 61. An after-mentioned link arm 72 of the rotation urging section 71 is rotatably attached to the fixed shaft 54A.

Similarly to the first rotation rail 61, the second rotation rail 62 is formed to have an arc shape expanding to the substantially center part of the bottom section 22b. The center of the arc of the second rotation rail 62 is coincident with the center of the arc of the first rotation rail 61. The second rotation rail 62 includes a first end 62a positioned on the side of one of the short sides of the bottom section 22b and a second end 62b positioned on the side of one of the long sides of the bottom section 22b. The fixed shafts 54B and 54C fixed to the attachment piece 51 are engaged with the second rotation rail 62.

A fall-out preventing member 69 is fixed to the fixed shaft 54B and 54C by a fixing screw 70. The fall-out preventing member 69 is engaged with the bottom section 22b in the inside of the panel case 22. The fall-out preventing member 69 is engaged with the bottom section 22b, so that the fixed shafts 54B and 54C do not detach from the second rotation rail 62.

The fixed shaft 54A is engaged with the first rotation rail 61, and the fixed shafts 54B and 54C are engaged with the second rotation rail 62, so that the display monitor 3 can be rotated by substantially 90 degrees on the monitor support section 41. The rotation center of the display monitor 3 is coincident with the center of the arc of the first rotation rail 61 and the second rotation rail 62.

The fixed shaft 54A is engaged with the first rotation rail 61, and the fixed shafts 54B and 54C are engaged with the second rotation rail 62, so that the rattle of the display monitor 3 with respect to the monitor support section 41 can be prevented.

When the fixed shaft 54A is positioned at the first end 61a of the first rotation rail 61, the fixed shaft 54B is positioned at the first end 62a of the second rotation rail 62, and the attitude of the display monitor 3 with respect to the monitor support section 41 becomes the first attitude. For example, when the first attitude occurs in the state where the display monitor 3 is positioned on the upper surface 2c of the outer case 2, the whole upper surface 2c of the outer case 2 is covered with the display monitor 3.

When the fixed shaft 54A is positioned at the second end 61b of the first rotation rail 61, the fixed shaft 54C is positioned at the second end 62b of the second rotation rail 62, and the attitude of the display monitor 3 with respect to the monitor support section 41 becomes the second attitude. For example, when the second attitude occurs in the state where the display monitor 3 is positioned on the upper surface 2c of the outer case 2, a part of the upper surface 2c of the outer case 2 is covered with the display monitor 3.

The connecting line through hole 63 is provided in the portion coincident with the center of the arc of the first rotation rail 61 and that of the second rotation rail 62. A connecting line to electrically connect the control circuit and the display monitor 3 passes through the connecting line through hole 63. That is, even if the display monitor 3 rotates on the monitor support section 41, the position where the connecting line passes through the panel case 22 of the display monitor 3 is not changed.

When the display monitor 3 is moved by the monitor movement mechanism 5 from the upper surface 2c of the outer case to the back surface 2b (or from the back surface 2b to the upper surface 2c), the position where the connecting line passes through the panel case 22 is changed. In this case, the connecting line moves in the connecting line through groove 19 of the outer case 2.

An after-mentioned link guide 73 of the rotation urging section 71 is fixed to the three fixing projections 64, 65 and 66. The fixing projection 64 is provided along the other of the short sides of the bottom section 22b, and is formed into a substantially rectangular parallelepiped shape. The fixing projection 64 includes a first side surface 64a orthogonal to a direction in which the two short sides of the bottom section 22b face each other, and a second side surface 64b and a third side surface 64c orthogonal to a direction in which the two long sides of the bottom section 22b face each other.

The fixing projections 65 and 66 are provided along the other of the long sides of the bottom section 22b. Each of the fixing projections 65 and 66 is formed into a plate shape, and includes a plane orthogonal to a direction in which the two long sides of the bottom section 22b face each other. Besides, the bottom section 22b is provided with plural reinforcing ribs 67 to raise the strength of the panel case 22.

Next, the rotation urging section 71 will be described.

The rotation urging section 71 includes the link arm 72 rotatably attached to the fixed shaft 54A, the link guide 73 fixed to the bottom section 22b of the panel case 22, and a pulling coil spring 74 to urge the link arm 72.

The link arm 72 is made of a thin and long plate body formed into a substantially rectangular shape. A step section 72a for avoiding the interference with the fall-out preventing member 69 is provided at an intermediate section of the link arm 72. An attachment hole 72b through which the fixed screw 70 screwed to the fixed shaft 54A passes is provided in one of the ends of the link arm 72. A pawl section 76 to which one end of the pulling coil spring 74 is attached is provided at the other of the ends of the link arm 72.

The fixing screw 70 is screwed to the fixed shaft 54A in the state where it passes through a washer 77 and the attachment hole 72b of the link arm 72. The washer 77 intervenes between the head of the fixed screw and one of the ends of the link arm 72. By this, the link arm 72 is rotatably attached to the fixed shaft 54A. Besides, the link arm 72 is attached, so that the fixed shaft 54A does not detach from the first rotation rail 61.

The link guide 73 is made of a plate body formed to be substantially L-shaped, and includes a base section 81 and an auxiliary plate section 82 continuous with the base section 81. The base section 81 is formed to be thin and long and substantially rectangular. A pawl section 84 to which the other end of the pulling coil spring 74 is attached is provided at one of the ends of the base section 81.

Two attachment pieces 85 and 86 are provided at one of the long sides of the base section 81. Each of the attachment pieces 85 and 86 is made of a plate body continuous with the base section 81 and protruding substantially vertically, and has a plane orthogonal to a direction in which the two long sides of the base section 81 face each other. The attachment pieces 85 and 86 are respectively fixed by fixing screws (not shown) to the fixing projections 65 and 66 of the panel case 22.

The auxiliary plate section 82 of the link guide 73 is continuous with the other of the long sides of the base section 81, and is formed into a substantially rectangular shape extending in a direction in which the two long sides of the base section 81 face each other. The auxiliary plate section 82 is provided with a contact piece 88 and an attachment piece 89 continuous with the contact piece 88. The contact piece 88 is made of a substantially rectangular plate body which is continuous with one of long sides of the auxiliary plate section 82 and protrudes substantially vertically, and has a plane orthogonal to a direction in which the two long sides of the auxiliary plate section 82 face each other. The contact piece 88 contacts with the first side surface 64a of the fixing projection 64 provided on the panel case 22.

The attachment piece 89 is made of a substantially rectangular plate body which is continuous with one of sides of the contact piece 88 and protrudes substantially vertically, and has a plane orthogonal to a direction in which the two long sides of the auxiliary plate section 82 extend. The attachment piece 89 is fixed by a fixing screw (not shown) to the third side surface 64c of the fixing projection 64 provided on the panel case 22.

The link arm 72 is typically urged by the pulling coil spring 74 so that the pawl section 76 approaches the pawl section 84 of the link guide 73. When the fixed shaft 54A is positioned at an intermediate part of the rotation rail 61, the distance between the pawl section 76 of the link arm 72 and the pawl section 84 of the link guide 73 becomes longest. As the fixed shaft 54A approaches the first end 62a of the first rotation rail 61 and the second end 62b, the pawl section 76 of the link arm 72 approaches the pawl section 84 of the link guide 73.

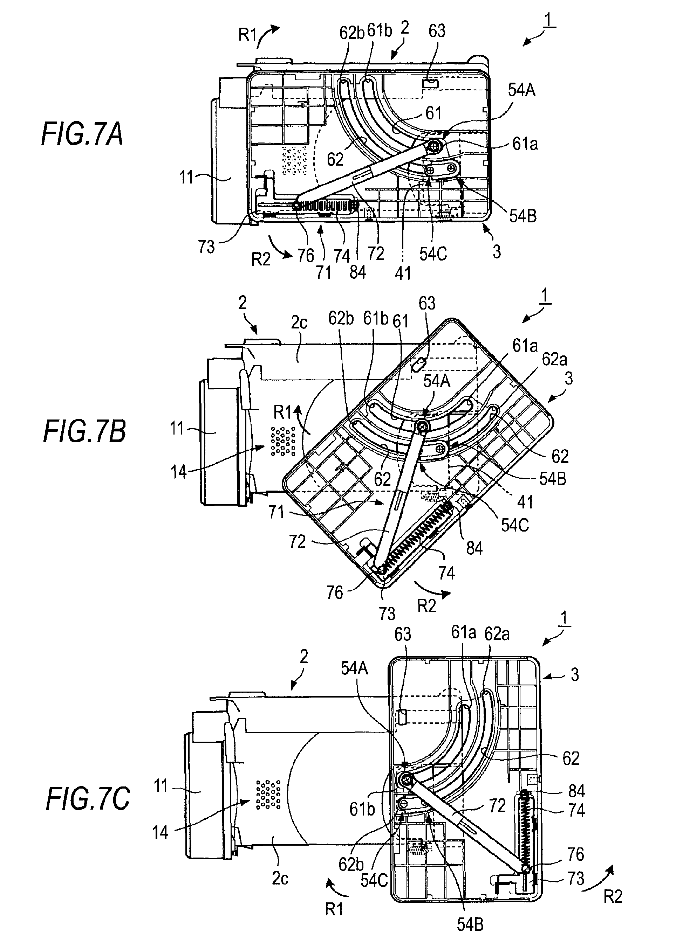

Accordingly, the attitude of the display monitor 3 is stabilized at the first attitude (see FIG. 7A) in which the fixed shaft 54A is positioned at the first end 61a of the first rotation rail 61 and the second attitude (see FIG. 7C) in which the fixed shaft 54A is positioned at the second end 61b of the first rotation rail 61. That is, when an external force is not applied to the display monitor 3, the display monitor 3 maintains the first attitude or the second attitude by the action of the rotation urging section 71.

Incidentally, in this embodiment, the fixed shaft 54B is brought into contact with the first end 62a of the second rotation rail 62 so that the positioning of the first attitude is performed. In the first attitude, a gap is formed between the first end 61a of the first rotation rail 61 and the fixed shaft 54A. Besides, the fixed shaft 54C is brought into contact with the second end 62b of the second rotation rail 62 so that the positioning of the second attitude is performed. In the second attitude, a gap is formed between the second end 61b of the first rotation rail 61 and the fixed shaft 54A.

For example, in the state where the display monitor 3 has the first attitude, when the fixed shaft 54A contacts with the first end 61a of the first rotation rail 61, the display monitor 3 rotates along the fixed shaft 54A. As a result, the rattle of the display monitor 3 with respect to the monitor support section 41 occurs.

However, as in this embodiment, in the first attitude, when the gap is formed between the first end 61a of the first rotation rail 61 and the fixed shaft 54A, the display monitor 3 does not rotate along the fixed shaft 54A. As a result, the rattle of the display monitor 3 in the first attitude can be prevented. Similarly to this, when a gap is formed between the second end 61b of the first rotation rail 61 and the fixed shaft 54A is formed, the rattle of the display monitor 3 in the second attitude can also be prevented.

### [Operation of the display monitor by the monitor rotation mechanism]

Next, the operation of the display monitor 3 by the monitor rotation mechanism 6 will be described with reference to FIG. 7A to FIG. 7C.

FIG. 7A is an explanatory view of a state where the display monitor 3 is positioned on the upper surface 2c of the outer case 2 and has the first attitude with respect to the monitor support section 41. FIG. 7B is an explanatory view for explaining a state where the display monitor is being rotated from the state shown in FIG. 7A. FIG. 7C is an explanatory view of a state where the display monitor 3 is further rotated from the state shown in FIG. 7B and the display monitor 3 has the second attitude with respect to the monitor support section 41.

As shown in FIG. 7A, when the display monitor 3 positioned on the upper surface 2c of the outer case 2 has the first attitude with respect to the monitor support section 41, the upper surface 2c of the outer case 2 is covered with the display monitor 3. In this state, since the fixed shaft 54B of the monitor support section 41 contacts with the first end 62a of the second rotation rail 62 provided at the display monitor 3, the rotation of the display monitor 3 in an R1 direction is restrained.

On the other hand, the fixed shaft 54A of the monitor support section 41 is close to the first end 61a of the first rotation rail 61 provided on the display monitor 3. The link arm 72 rotatably attached to the fixed shaft 54A is urged by the pulling coil spring 74 so that the pawl section 76 approaches the pawl section 84 of the link guide 73. Thus, the spring force of the pulling coil spring 74 generates the resistance force against the rotation of the display monitor 3 in an R2 direction. As a result, the display monitor 3 maintains the first attitude.

In order to change the attitude of the display monitor 3 from the first attitude shown in FIG. 7A to the second attitude shown in FIG. 7C, the display monitor 3 is pressed in the R2 direction against the spring force of the pulling coil spring 74. When the display monitor is pressed in the R2 direction, the display monitor 3 is rotated, and the link guide 73, together with the display monitor 3, is displaced. By this, the pawl section 76 of the link arm 72 goes away from the pawl section 84 of the link guide 73.

In the state shown in FIG. 7B, the distance between the pawl section 76 and the pawl section 84 becomes longest. At this time, the fixed shaft 54A is positioned at a substantially intermediate part of the first rotation rail 61, and the fixed shafts 54B and 54C are positioned at a substantially intermediate part of the second rotation rail 62.

When the display monitor 3 is further pressed in the R2 direction from the state shown in FIG. 7B, the display monitor 3 is rotated, and the link guide 73 is displaced so that the pawl section 84 approaches the pawl section 76 of the link arm 72. Thus, the spring force of the pulling coil spring 74 acts as the force to rotate the display monitor 3 in the R2 direction. Accordingly, even if pressing is not performed further, the display monitor 3 is rotated in the R2 direction by the spring force of the pulling coil spring 74.

Thereafter, the fixed shaft 54C contacts with the second end 62b of the second rotation rail 62, and the rotation of the display monitor 3 in the R2 direction is locked. As a result, the display monitor 3 has the second attitude shown in FIG. 7C.

In the state shown in FIG. 7C, the fixed shaft 54A is close to the second end 61b of the first rotation rail 61. The link arm 72 is urged by the pulling coil spring 74 so that the pawl section 76 approaches the pawl section 84 of the link guide 73. Thus, the spring force of the pulling coil spring 74 generates the resistance force against the rotation of the display monitor 3 in the R1 direction. As a result, the display monitor 3 maintains the second attitude.

Incidentally, in order to change the attitude of the display monitor 3 from the second attitude to the first attitude, the display monitor 3 is pressed in the R1 direction against the spring force of the pulling coil spring 74. When the display monitor 3 is pressed in the R2 direction, the display monitor 3 is rotated, and the pawl section 76 of the link arm 72 goes away from the pawl section 84 of the link guide 73. Then, in the state shown in FIG. 7B, the distance between the pawl section 76 and the pawl section 84 becomes longest.

When the display monitor 3 is further pressed in the R1 direction from the state shown in FIG. 7B, the display monitor 3 is rotated, and the link guide 73 is displaced so that the pawl section 84 approaches the pawl section 76 of the link arm 72. Thus, the spring force of the pulling coil spring 74 acts as the force to rotate the display monitor 3 in the R1 direction. Accordingly, even if pressing is not performed further, the display monitor 3 is rotated in the R1 direction by the spring force of the pulling coil spring 74.

Thereafter, the fixed shaft 54B contacts with the second end 62b of the second rotation rail 62, so that the rotation of the display monitor 3 in the R1 direction is locked. As a result, the display monitor has the second attitude shown in FIG. 7A.

### [Operation of the display monitor by the monitor movement mechanism]

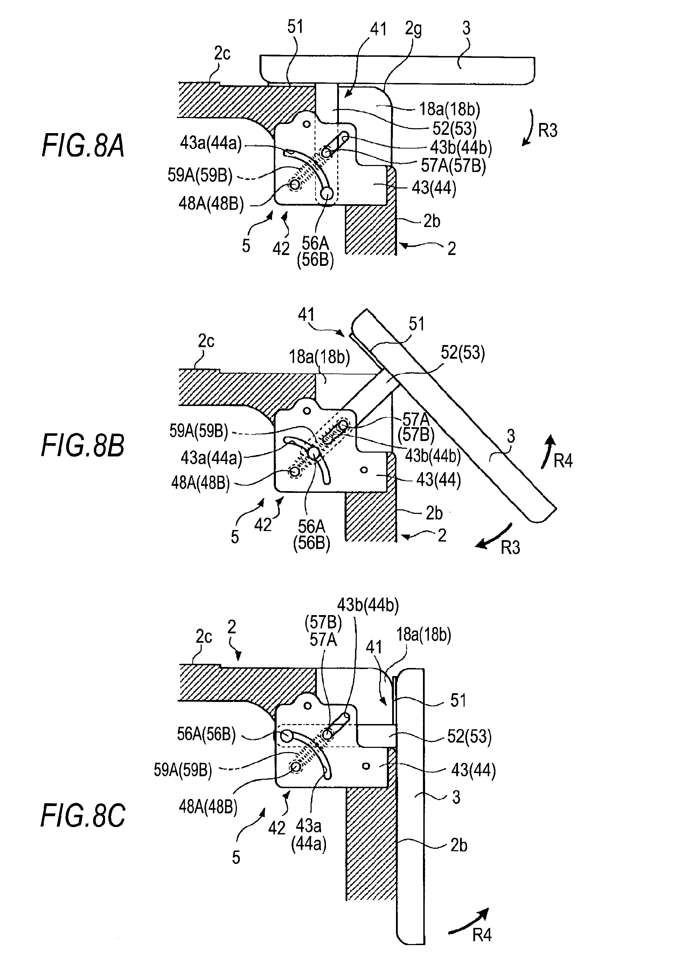

Next, the operation of the display monitor 3 by the monitor movement mechanism 5 will be described with reference to FIGS. 8A to 8C.

FIG. 8A is an explanatory view of a state where the display monitor 3 is positioned on the upper surface 2c of the outer case 2, and has the second attitude with respect to the monitor support section 41. FIG. 8B is an explanatory view showing a state where the display monitor 3 is being moved from the state shown in FIG. 8A. FIG. 8C is an explanatory view of a state where the display monitor 3 is further moved from the state shown in FIG. 8B and is disposed on the back surface 2b of the outer case 2.

The state shown in FIG. 8A is obtained when the state shown in FIG. 7C is seen in the right and left direction. As shown in FIG. 8A, in the state where the display monitor 3 is disposed on the upper surface 2c of the outer case 2, the arm pieces 52 and 53 of the monitor support section 41 pass through the support section through grooves 18a and 18b and project from the upper surface 2c of the outer case 2.

In this state, the first engagement pins 56A and 56B fixed to the arm pieces 52 and 53 contact with the lower ends of the first movement rails 43a and 44a provided in the guide plates 43 and 44. Besides, the second engagement pins 57A and 57B fixed to the arm pieces 52 and 53 contact with the lower ends of the second movement rails 43b and 44b provided in the guide plates 43 and 44.

The monitor support section 41 is typically urged by the pulling coil springs 59A and 59B so that the second engagement pins 57A and 57B go toward the lower ends of the second movement rails 43b and 44b. Thus, the spring force of the pulling coil springs 59A and 59B generates the resistance force against the movement (rotation) of the display monitor 3 in an R3 direction. As a result, the display monitor 3 maintains the state where it is disposed on the upper surface 2c of the outer case 2.

In order to move the display monitor 3 from the upper surface 2c of the outer case 2 to the back surface 2b, the display monitor 3 is pressed in the R3 direction against the spring force of the pulling coil springs 59A and 59B. When the display monitor 3 is pressed in the R3 direction, the monitor support section 41 to support the display monitor 3 is guided by the first movement rails 43a and 44a and the second movement rails 43b and 44b and is moved. At this time, the first engagement pins 56A and 56B are moved upward along the first movement rails 43a and 44a, and the second engagement pins 57A and 57B are moved upward along the second movement rails 43b and 43a.

By this, the monitor support section 41 is rotated in the R3 direction while the rotation center is changed. That is, the monitor support section 41 rotates while lifting the display monitor 3 so as to separate it from the angular section 2g of the outer case 2. In the state shown in FIG. 8B, the display monitor is most distant from the angular section 2g of the outer case 2. At this time, the first engagement pins 56A and 56B are positioned at substantially intermediate parts of the first movement rails 43a and 44a, and the second engagement pins 57A and 57B are positioned at the lower ends of the second movement rails 43b and 44b.

When the display monitor 3 is further pressed in the R3 direction from the state shown in FIG. 8B, the first engagement pins 56A and 56B move upward along the first movement rails 43a and 44a. On the other hand, the second engagement pins 57A and 57B move downward along the second movement rails 43b and 44b. Thus, the spring force of the pulling coil springs 59A and 59B acts as the force to rotate the monitor support section 41 and the display monitor 3 in the R3 direction. Accordingly, even if pressing is not further performed, the display monitor 3 rotates in the R3 direction by the spring force of the pulling coil springs 59A and 59B.

Thereafter, the first engagement pins 56A and 56B contact with the upper ends of the first movement rails 43a and 44a, and the second engagement pins 57A and 57B contact with the lower ends of the second movement rails 43b and 44b. By this, the rotation of the monitor support section 41 in the R3 direction is locked, and the display monitor 3 climbs over the angular section 2g of the outer case 2 and is disposed on the back surface 2b (see FIG. 2).

In the state shown in FIG. 8C, the monitor support section 41 is typically urged by the pulling coil springs 59A and 59B so that the second engagement pins 57A and 57B go toward the lower ends of the second movement rails 43b and 44b. Thus, the spring force of the pulling coil springs 59A and 59B generates the resistance force against the movement (rotation) of the display monitor in an R4 direction. As a result, the display monitor 3 maintains the state where it is disposed on the back surface 2b of the outer case 2.

Incidentally, in order to move the display monitor 3 from the back surface 2b of the outer case 2 to the upper surface 2c, the display monitor 3 is pressed in the R4 direction against the spring force of the pulling coil springs 59A and 59B. At this time, the first engagement pins 56A and 56B move downward along the first movement rails 43a and 44a, and the second engagement pins 57A and 57B move upward along the second movement rails 43b and 44b.

By this, the monitor support section 41 rotates in the R4 direction while the rotation center is changed. That is, the monitor support section 41 rotates while lifting the display monitor 3 so as to separate it from the angular section 2g of the outer case 2. Then, in the state shown in FIG. 8B, the display monitor 3 is most distant from the angular section 2g of the outer case 2.

When the display monitor 3 is further pressed in the R4 direction from the state shown in FIG. 8B, the first engagement pins 56A and 56B move downward along the first movement rails 43a and 44a. On the other hand, the second engagement pins 57A and 57B move downward along the second movement rails 43b and 44b. Thus, the spring force of the pulling coil springs 59A and 59B acts as the force to rotate the monitor support section 41 and the display monitor 3 in the R4 direction. Accordingly, even if pressing is not further performed, the display monitor 3 is rotated in the R4 direction by the spring force of the pulling coil springs 59A and 59B.

Thereafter, the first engagement pins 56A and 56B contact with the lower ends of the first movement rails 43a and 44a, and the second engagement pins 57A and 57B contact with the lower ends of the second movement rails 43b and 44b. By this, the rotation of the monitor support section 41 in the R4 direction is restrained, and the display monitor 3 climbs over the angular section 2g of the outer case 2 and is disposed on the upper surface 2c.

In the foregoing description, the attitude of the display monitor 3 is changed from the first attitude to the second attitude on the upper surface 2c of the outer case 2, and then, the display monitor 3 is moved from the upper surface 2c of the outer case 2 to the back surface 2b. However, in the digital video camera 1 according to this embodiment, after the display monitor 3 is moved from the upper surface 2c of the outer case 2 to the back surface 2b, the attitude of the display monitor 3 can be changed from the first attitude to the second attitude on the back surface 2b of the outer case 2.

### [Effects of the first embodiment]

According to the digital video camera 1 of this embodiment, the display monitor 3 is moved from the upper surface 2c of the outer case 2 to the back surface 2b (or from the back surface 2b to the upper surface 2c) by the monitor movement mechanism 5. When the display monitor 3 climbs over the angular section 2g of the outer case 2, the monitor movement mechanism 5 rotates while lifting the display monitor 3. That is, the monitor movement mechanism 5 rotates the display monitor 3 while the rotation center is changed. Thus, the display monitor 3 can be moved from the upper surface 2c to the back surface 2b (or from the back surface 2b to the upper surface 2c) only by the rotation operation.

Further, when the display monitor 3 climbs over the angular section 2g of the outer case 2, the monitor movement mechanism 5 rotates the display monitor 3 while lifting it. Accordingly, it is not necessary that the angular section 2g has roundness. Accordingly, the outer case 2 can be formed into a linear outer appearance shape such as a rectangular parallelepiped, and the design property can be improved.

When photographing is not performed, the display monitor 3 is disposed on the upper surface 2c of outer case 2, and when photographing is performed, the display monitor can be disposed on the back surface 2b. By this, when photographing is performed, the display screen 21a of the display monitor 3 can be disposed at the position where it crosses the optical axis of the optical system. Thus, a subject displayed on the display screen 21a does not deviate from an actual subject in the right and left direction. As a result, it is possible to obtain the visual effect that an image displayed on the display screen 21a is seen as if the space is clipped and the image is displayed.

Besides, when photographing is performed, the display monitor 3 is disposed on the back surface 2b. Thus, the digital video camera 1 can be gripped with both the right hand and the left hand. Further, the digital video camera 1 can be gripped with good balance, and the load applied to the hand to grip the digital video camera 1 can be reduced. Accordingly, it is possible to prevent that the hand to grip the digital video camera 1 trembles or shakes.

According to the digital video camera 1 of this embodiment, the monitor movement mechanism 5 is provided inside the outer case 2, and is concealed with the display monitor 3. Thus, the panel case 22 of the display monitor 3 can be made to have substantially the same size as the upper surface 2c having a larger area than the back surface 2b of the outer case 2, and the display screen 21a can be made large. Besides, when photographing is not performed, the digital video camera 1 is made to have a substantially rectangular parallelepiped shape and can be made to have the shape excellent in portability.

Further, the various operation buttons, such as the recording button 16, provided on the upper surface 2c of the outer case 2 and the sound collection hole 14 can be covered with the display monitor 3. Accordingly, when photographing is not performed, the various buttons required for the photographing can be concealed, and the outer appearance of the digital video camera 1 can be made simple.

According to the digital video camera 1 of this embodiment, the display monitor 3 is rotated on the monitor support section 41 by the monitor rotation mechanism 6. Thus, when the display monitor 3 is disposed on the back surface 2b of the outer case 2, the attitude of the display monitor 3 can be changed to such an attitude (second attitude) that the long side extends in the right and left direction. By this, when the display monitor 3 is disposed on the back surface 2b of the outer case 2, the up and down direction of the image displayed on the display monitor 21a can be made coincident with the actual up and down direction.

### <2. Second embodiment>

### [Outer appearance structure of the display apparatus]

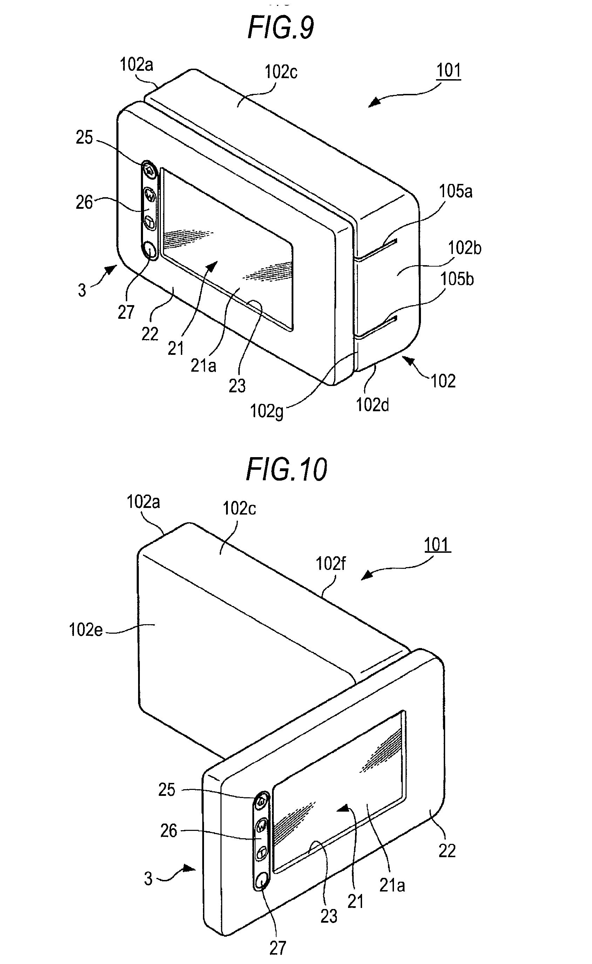

Next, an outer appearance structure of a digital video camera according to a second embodiment of the invention will be described with reference to FIG. 9 and FIG. 10.

FIG. 9 is a perspective view of a state where a display monitor of the digital video camera according to the second embodiment is disposed on a left side surface. FIG. 10 is a perspective view of a state where the display monitor of the digital video camera according to the second embodiment is disposed on a back surface.

A digital video camera 101 shown in FIG. 9 and FIG. 10 has the same structure as the digital video camera 1 according to the first embodiment, and a difference is only an attachment state of an outer case 102 and a monitor movement mechanism. Thus, here, the attachment state of the outer case 102 and the monitor movement mechanism will be described, and the same portion as that of the digital video camera 1 is denoted by the same reference numeral and its duplicate explanation is omitted.

The digital video camera 101 includes the outer case 102 and a display monitor 3. The outer case 102 is formed into a substantially rectangular parallelepiped shape extending long in the front and back direction. The outer case 102 includes a front surface 102a directed forward, a back surface 102b directed backward, an upper surface 102c, a lower surface 102d, a left side surface 102e, and a right side surface 102f.

In this embodiment, the left side surface 102e indicates a specific example of a first surface, and the back surface 102b indicates a specific example of a second surface. The left side surface 102e and the back surface 102b are planes substantially orthogonal to each other, and form an angular section 102g. The area of the back surface 102b is smaller than the area of the left side surface 102e.

An objective lens of a lens barrel is disposed to face forward at the front surface 102a of the outer case 102. Plural operation buttons, a sound collection hole (not shown) for microphone, and the like are provided on the upper surface 102c of the outer case 102. The operation buttons include, for example, a zoom button, a recording button, a power source button, a function change button and the like.

Besides, the outer case 102 is provided with a pair of support section through grooves 105a and 105b, and a connecting line through groove (not shown). The pair of support section through grooves 105a and 105b and the connecting line through groove are provided to be continuous with the left side surface 102e and the back surface 102b constituting the angular section 102g. A pair of arm pieces 52 and 53 (see FIG. 6) of the monitor movement mechanism 5 movably pass through the pair of support section through grooves 105a and 105b. A connecting line to electrically connect a control circuit and the display monitor 3 movably passes through the connecting line through groove.

### [Monitor movement mechanism]

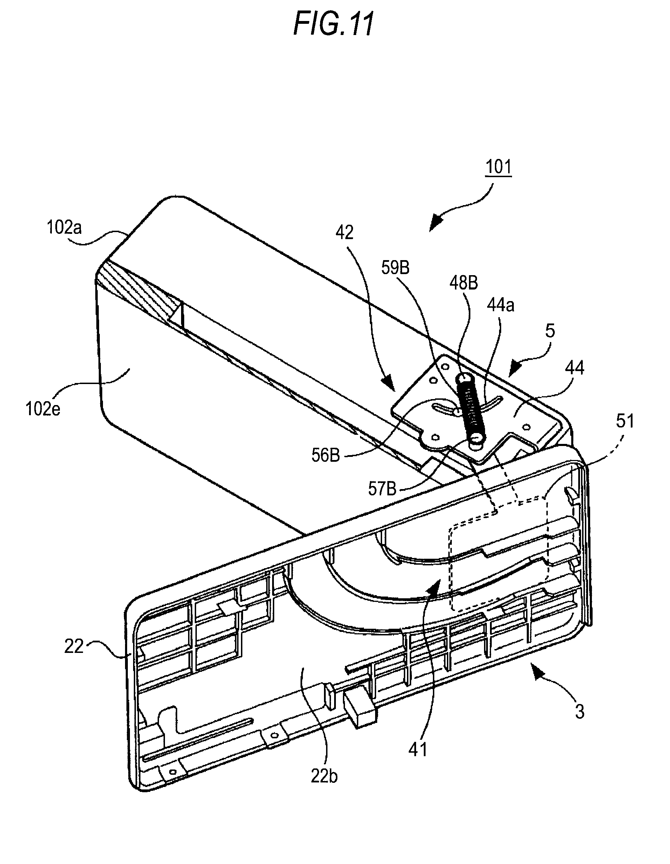

Next, the monitor movement mechanism 5 will be described with reference to FIG. 11.

FIG. 11 is an explanatory view showing an attachment state of the monitor movement mechanism 5 of the digital video camera 101.

The monitor movement mechanism 5 moves the display monitor 3 from the left side surface 102e of the outer case 102 to the back surface 102b or from the back surface 102b to the left side surface 102e. The monitor movement mechanism 5 is disposed in the outer case 2 in a state where the pair of arm pieces 52 and 53 face each other in the up and down direction. Accordingly, the monitor support section 41 of the monitor movement mechanism 5 climbs over the angular section 102g and moves from the left side surface 102e of the outer case 102 to the back surface 102b (or from the back surface 102b to the left side surface 102e).

Besides, in this embodiment, the panel case 22 of the display monitor 3 is fixed to the attachment piece 51 of the monitor movement mechanism 5 by a fixing screw (not shown). Thus, the display monitor 3 does not rotate on the attachment piece 51 (the monitor support section 41). That is, the digital video camera 101 does not include the monitor rotation mechanism 6 which is provided in the digital video camera 1 of the first embodiment.

### [Effects of the second embodiment]

According to the digital video camera 101 of this embodiment, the same operation and effects as those of the digital video camera 1 of the first embodiment can be obtained. That is, the monitor movement mechanism 5 rotates the display monitor 3 while changing the rotation center. Thus, the display monitor can be moved from the left side surface 102e of the outer case 102 to the back surface 102b (or from the back surface 102b to the left side surface 102e) only by the rotation operation.

Besides, when photographing is not performed, the display monitor 3 is disposed on the left side surface 102e of the outer case 102, and when photographing is performed, the display monitor can be disposed on the back surface 102b. By this, when photographing is performed, the display screen 21a of the display monitor 3 can be disposed at the position where it crosses the optical axis of the optical system.

Besides, the monitor movement mechanism 5 is provided inside the outer case 102, and is concealed with the display monitor 3. Thus, the panel case 22 of the display monitor 3 can be made to have substantially the same size as the left side surface 102e having a larger area than the back surface 102b of the outer case 102, and the display screen 21a can be made large. Besides, when photographing is not performed, the digital video camera 101 is made to have a substantially rectangular parallelepiped shape, and can be made to have the shape excellent in portability.

### [Modified examples]

The invention is not limited to the embodiments described before and illustrated in the drawings, but can be variously modified within the scope not departing from the gist thereof. For example, in the embodiment, although the description is made while the digital video camera is used as the specific example in which the display apparatus is applied, the display apparatus of the invention can be applied to a digital still camera or other various image pickup apparatuses.

In the embodiment, the digital video camera includes the hard disk drive. Then, the image signal converted by the solid image pickup device 32 is stored in the hard disk drive. However, the image pickup apparatus to which the display apparatus is applied may be structured such that an image signal is recorded on an information storage medium such as a disk-like record medium or a tape-like storage medium.

In the foregoing embodiments, the monitor rotation mechanism 6 includes the rotation rails 61 and 62 provided in the panel case 22 and the fixed shafts 54A to 54C provided on the monitor support section 41. However, as the monitor rotation mechanism of the embodiment of the invention, another mechanism may be applied in which the display monitor 3 is rotated on the monitor support section 41. The another monitor rotation mechanism may include, for example, a rotation shaft fixed to the panel case 22 and a bearing which is provided on the monitor support section 41 and rotatably supports the rotation shaft.

In the foregoing embodiments, although the pulling coil springs 59A and 59B are used as the movement mechanism urging member, the moving mechanism urging member of the embodiment of the invention may use an elastic body such as a plate spring or a rubber member.

In the foregoing embodiments, the first movement rails 43a and 44a and the second movement rails 43b and 44b are provided in the guide section 42. However, as the guide section of the invention, one first movement rail and one second movement rail may be provided.

The present application contains subject matter related to that disclosed in Japanese Priority Patent Application JP 2008-317719 filed in the Japan Patent Office on December 12, 2008.

It should be understood by those skilled in the art that various modifications, combinations, sub-combinations and alterations may occur depending on design requirements and other factors insofar as they are within the scope of the appended claims or the equivalents thereof.

## Claims

1. A display apparatus comprising:
an outer case (2; 102) having a first surface (2c; 102e) and a second surface (2b, 102b) which constitute an angular section (2g; 102g);
a display monitor (3); and
a monitor movement mechanism (5) which includes a monitor support section (41) to support the display monitor (3), and a guide section (42) to guide movement of the monitor support section (41) to cause the monitor support section (41) to rotate while a rotation center is changed, and moves the display monitor (3) from the first surface (2c; 102e) of the outer case (2; 102) to the second surface (2b; 102b) and from the second surface (2b; 102b) to the first surface (2c; 102e).

2. The display apparatus according to claim 1, wherein
the guide section (42) of the monitor movement mechanism (5) is provided inside the outer case (2), and
the outer case (2) includes a support section insertion groove through which the monitor support section (41) movably passes.

3. The display apparatus according to claim 2, wherein the monitor movement mechanism (5) includes a movement mechanism urging member (6) which urges the monitor support section (41) to cause the display monitor (3) to be positioned on one of the first surface (2c) and the second surface (2b).

4. The display apparatus according to claim 3, wherein
the guide section (42) includes a first movement rail (43a, 44a) formed into an arc shape expanding to the angular section and a second movement rail (43b, 44b) disposed at an outer diameter side of the first movement rail (43a, 44b) and extending to the angular section, and
the monitor support section (41) includes a first engagement pin (56A, 56B) to engage with the first movement rail (43a, 44a), and a second engagement pin (57A, 57B) to engage with the second movement rail (43b, 44b).

5. The display apparatus according to claim 4, wherein the monitor support section (41) includes an arm piece (52, 53) provided with the first pin (56A, 56B) and the second pin (57A, 57B), and an attachment piece (51) which is continuous with the arm piece (52, 53) and to which the display monitor (3) is attached.

6. The display apparatus according to claim 5, wherein
the outer case (2) has a front surface (2a) at which an objective lens of a lens barrel is disposed, and
the first surface (2c) is a surface continuous with the front surface (2a), and the second surface (2b) is a back surface opposite to the front surface (2a).

7. The display apparatus according to claim 6, wherein
the first surface (2c) is an upper surface of the outer case (2), and
an area of the back surface (2b) is smaller than an area of the upper surface (2c).

8. The display apparatus according to claim 2, further comprising a monitor rotation mechanism (6) to rotate the display monitor (3) on the monitor support section (41).

9. The display apparatus according to claim 8, wherein the monitor rotation mechanism (6) includes
a rotation rail provided at the display monitor (3); and
a fixed shaft provided on the monitor support section (41) and engaged with the rotation rail.

10. The display apparatus according to claim 8, wherein the monitor rotation mechanism (6) includes a rotation urging section which urges the display monitor (3) to cause an attitude of the display monitor (3) to become one of a first attitude and a second attitude.
